# EUROPEAN PATENT SPECIFICATION

(11) **EP 0 559 598 B1**
(45) Date of publication and mention of the grant of the patent: **05.06.1996**
(21) Application number: 93610017.1
(22) Date of filing: 03.03.1993
(51) Int. Cl.: B65D 1/00, B65D 33/01, B32B 31/00

(54) **Foil for the production of a pack, as well as the method of manufacture and use of such a foil**
Folie zur Erstellung einer Packung sowie Herstellungsverfahren und Verwendung dieser Folie
Feuille pour la fabrication d'un emballage, ainsi que la procédé de fabrication et l'utilisation d'une telle feuille

(30) Priority: 03.03.1992 DK 284/92
(43) Date of publication of application: 08.09.1993
(73) Proprietor: Danapak Holding A/S, DK-2840 Holte (DK)
(72) Inventor: Goldman, Josef, DK-8381 Mundelstrup (DK)
(74) Representative: Larsen, Hans Ole

(56) References cited:
- EP-A- 0 144 011
- EP-A- 0 155 035
- DE-A- 2 331 862
- DE-A- 3 521 373
- FR-A- 2 629 060

## Description

### Background of the invention

The invention relates to a foil for the construction of a packing with valve, primarily for the packing of such products as emit gasses, which foil consists of an inner and an outer layer, in which layers perforations are made, the perforations of the one layer being staggered in relation to those of the other layer, and comprising longitudinally extending pocketlike limited sections in which the layers are not glued together.

Foils to be used when making packings for products emitting gasses and vapours, such as freshly ground coffee, require a valve device on the packing in order for the gasses to escape the packing.

Such a valve device is a prerequisite in order that such products can be packed without causing the packing to inflate at the risk of bursting. It is thus desirable that coffee can be packed immediately following the grinding in order that it will keep its aroma and flavour.

At the same time it is important that the valve device will only release excess pressure in the packing and does not give access to the influx of air. The valve device must therefore be able to operate as a one-way valve from the interior of the packing and out.

Various kinds of packing foils of this kind are known. DK patent no. 150 137 describes a laminate for the production of a packing with a valve shaped as a channel extending between the layers of foil and opening at the one edge of the packing. Perforations occur through the interior foil layer in the channel.

By any excess pressure in the packing, gasses can pass through the perforations into the channel and via the channel through its mouth at the side of the channel to the ambience.

This construction is, however, inexpedient, since it requires that the channel is not sealed when the packing is closed by sealing. If the channel is closed by the sealing, the valve cannot operate since no gas can be let out to the ambience from the channel. Consequently, special measures need be taken in order to keep the channel free during filling and subsequent sealing. Add to this that the channel is fairly long, the consequence being that a relatively great excess pressure is required for the gasses to force the layers in the channel away from each other for the creation of the passage.

Finally, due to the relatively large area of the channel the valve has a correspondingly large inertia in its performance which may cause air to enter into the channel and further through the perforations to the packing due to the slow collapse of the layers in the channel.

In order to overcome these operational disadvantages and shortcomings of this known foil, it is known for instance from the specification of US patent no. 2 870 954 to arrange a valve on the actual packing. The valve has the shape of a piece of foil with a through-going hole, which piece of foil is sealed to the inside of the packing foil so as to form a limited channel between the packing and the extra piece of foil. In the packing foil a hole is furthermore provided whereby a valve is formed which is able to release excess pressure through the interior hole in the foil piece, via the channel and out through the hole in the packing foil to the ambience.

This valve is, however, inexpedient in that it must be sealed to the inside of the packing foil, and the packing foil must be perforated. This is difficult and means that it is far too expensive to provide in practice.

Finally, from FR patent no. 2 629 060 is known a foil of the above mentioned art which known foil, however, due to the relatively large area of the channel, the valve has a correspondingly large inertia in its performance which may cause air to enter into the channel and further through the perforations to the packing due to the slow collapse of the layers in the channel. Further, the foil is weakened by the many holes into the two layers.

The increased packing price also means that normally only one single valve will be provided which may prove inadequate if for instance coffee closes the outlet hole to the valve.

### Advantages of the invention

If according to the invention the one layer is coated with glue everywhere on the inside with the exception of a row of sections positioned opposite a row of perforations, after which the layers are put together for the formation of the finished laminate, where the holes extend through the layers into the pockets in the section, a surprisingly simply designed packing foil is obtained, in which the valve is integral with the foil, and which can be produced on existing machinery and is easy to apply, since no particular considerations with respect to the foil must be taken, when it is sealed for the formation of the closed packing. The foil can be so dimensioned that following the cutting into pieces there will always be at least one valve in each piece of packing, but typically more. When the unlaminated sections consist of separate pockets, the foil is only weakened to a limited extent when compared to the foil known from the said FR patent no. 2 629 060.

The disadvantages of the known packing foils in respect of production, closure and valve performance are hereby avoided altogether, and, moreover, the foil according to the invention has no limitations as regards meeting requirements to the dimension, barrier properties, reflection, decoration etc. of the packing.

As disclosed in claim 2, by making the foil by means of a glue on the entire inner surface of the one layer, with the exception of the sections which are to remain unlaminated, and a subsequent glueing together of the layers, manufacture of the packing foil can be carried out as for any packing foil with the added qualities that integral valves are simultaneously made in the foil.

As disclosed in claim 3, by adding glue by means of a roller with recesses, manufacture can be performed by making simple adjustments on existing production machinery.

Finally, it is expedient, as disclosed in claim 4, to use this foil for packing especially freshly ground coffee in that filling and closure of the packing can be carried out on existing machines without making changes. This ensures an economical filling and packing of freshly ground coffee and ensures that excess pressure is released and that ambient air is prevented from entering the coffee.

### The drawing

An example of an embodiment according to the invention will be described below with reference to the drawing, in which
- fig. 1: shows a machine for producing the foil according to the invention,
- fig. 2: shows a piece of the foil,
- fig. 3: shows a section through a valve seen in the direction III-III in fig. 2, and
- fig. 4: shows a bag prior to filling and closure.

### Description of the example embodiment

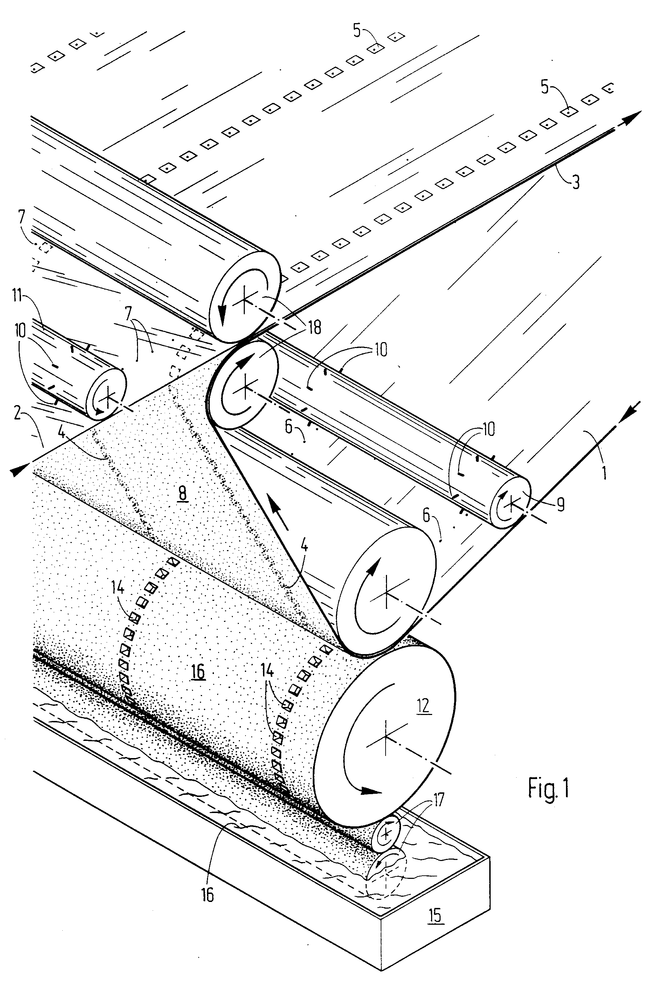

Fig. 1 shows an example of a machine for the production of a foil with integral valve.

References to foil and foil layer in the following should be taken as names for any material used for packing purposes. Such materials may be plastic, metal foil, paper and combinations thereof.

The one foil layer 1 is supplied in a generally known manner from a supply roll (not shown) to a roller 9 the surface of which is provided with a number of needles 10. These needles 10 are placed on the roller 9 so as to form one or more rows of holes or perforations 6 in the foil layer 1.

The perforated foil 1 is then supplied to a glue application roller 12.

This roller 12 is provided with one or a number of rows of recesses 14 on its surface, which sections may be defined rectangular recesses. The recesses mean that the glue cannot be transferred to the foil 1 since no glue film is formed above the recesses 14.

The glue on the roller 12 is fed by under-lying application rollers 17 which pass liquid glue or adhesive 16 from a vessel 15 to the surface of the glue application roller 12 in a suitable layer.

Once the foil 1 has passed the glue application roller 12, it is coated with glue 16 on the one side of the extent of the entire foil with the exception of the sections 4 where no glue is applied because of the recesses 14 in the roller 12.
The sections 4 are positioned so as for the perforations 6 to extend through the foil 1 in the sections 4, preferably near the one side of the sections.

From another not-shown supply roller a second foil layer 2 is passed to a perforation roller 11 which is also provided with needles 10 on its surface. This perforation roller 11 turns preferably synchronously with the perforation roller 9 referred to above, in order to ensure that the perforations are placed as accurately as possible in relation to each other and to the unlaminated section 4. It is thus important that the perforations of the two layers are not placed too close to each other, since this might render the valve performance inadequate. Hence, the perforations in the one layer 1 can be placed at one side of the section 4, whereas the perforations 7 in the other layer 2 can be placed at the opposide side of the section 4. This ensures that the perforations are staggered relative to each other in order to make sure that the valve operates as required.

Perforation rollers 9 with many needles 10 can be used, because any perforations outside the sections 4 will have no detrimental influence, the reason being that they are closed as lamination with the other layer takes place.

The perforation rollers 9 and 11 are controlled in a generally known manner, preferably by providing the one length of foil with a recordable marking for control of the other length of foil and roller.

After the perforation of the second layer 2, both lengths 1 and 2 are conveyed to a pair of lamination rollers 18, where the adhesion of the layers takes place.

The finished packing foil 3 can then be rolled up for subsequent use.

It will be understood from this description of the method for producing the foil that a packing foil 3 can be made in a surprisingly simple manner by laminating thus perforated and glue-coated layers, which packing foil has integral valves and can be produced by a simple method on existing machines.

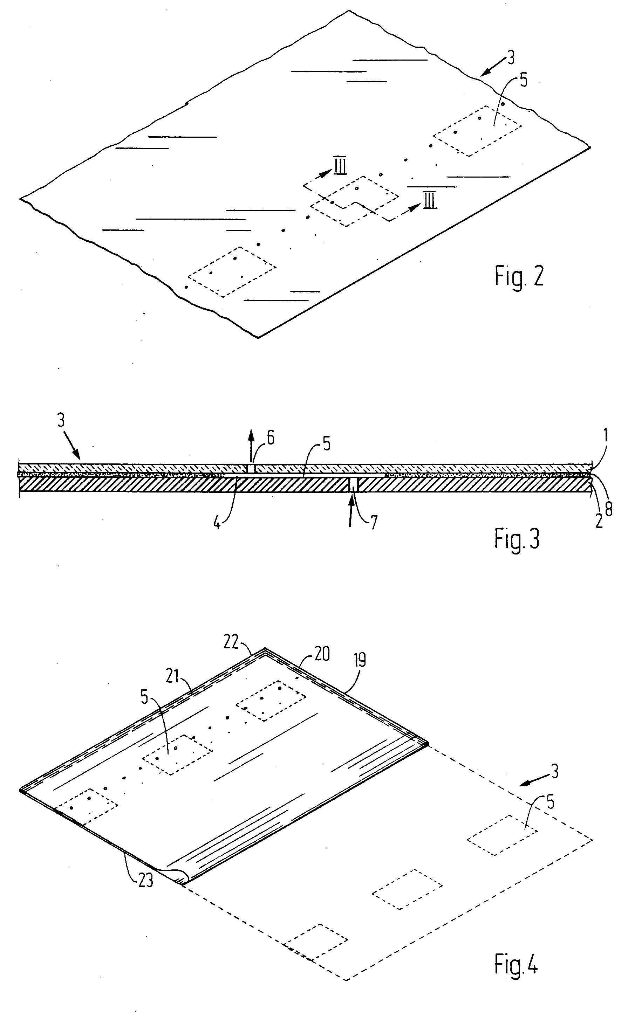

The valves will now be described with reference to figs. 2 and 3. A piece of a finished foil 3 is illustrated in fig. 2. As will be seen from the example, where the valve is implied by dash line, these valves are placed in a row extending in the entire length of the foil. The foil is glued together in its full extent with the exception of the unlaminated sections.

As will be seen from the sectional view in fig. 3, the unlaminated sections 4, i.e. the sections where no glue 8 is applied, form a pocket 5. This pocket is limited to the unlaminated section 4 which thus only weakens the laminate to a limited extent.

There is only access to the pocket 5 through one perforation, which in the shown example may be the bottom perforation 7, and access from the pocket 5 to the ambience through the perforation 6 of the outermost layer.

Dimensioning and positioning of the pocket 5 and the perforations 6 and 7 can be adjusted to the layer thickness, strength, position etc.

Several perforations 6 and 7 may extend to the pocket 5 just as perforations may occur between the sections 4. Due to the adhesion there will be no through-going holes in the foil 3 since the perforations are made through one layer only and are staggered in relation to the perforations of the other layer. It should be remembered that the perforations are staggered ensuring that there will always be at least one unbroken layer of foil to ensure the tightness and strength of the foil.

The performance of the valve requires that the layers 1 and 2 everywhere lie closely together in the unlaminated section 4. The perforations 6 and 7 hereby remain closed in that the opposite foil layer will function as a flexible flap valve for the perforation.

By any excess pressure on the interior surface of the packing, air or gasses must be allowed to pass through the perforations and inflate the pocket 5 in order to provide passage to the perforation of the opposite layer and out. The valve thus acts as an excess-pressure valve. Due to the outside air pressure, a packed product will be protected against any influx of air, since the layers will be forced together and will close the bag 5.

Fig. 4 shows an example of a packing as it may be configured for use when packing freshly ground coffee or any other gas emitting product.

The foil 3 is cut off a roller, and it is made sure that at least one valve is present in the foil per section. The foil is then folded and sealed along the side edge 22 and bottom edge 19 with sealing seams 20 and 21. The bag formed hereby is then filled in a generally known manner with the product and closed at the top edge 23 for instance by sealing.

The embodiment of the packing with valves ensures that any excess pressure can be released through the valve. Excess pressure may occur either from the packed product or by a high storage temperature. The excess pressure is released through the valve, and when the difference in pressure is equalized, the valve will automatically close, because the foil layers in the unlaminated section 4 are forced together by the outside air pressure, whereby the ambient air cannot enter the packing.

## Claims

1. Foil for the construction of a packing with valve, primarily for the packing of such products as emit gasses, which foil consists of an inner and an outer layer, in which layers (1, 2) perforations (6, 7) are made, the perforations (6) of the one layer (1) being staggered in relation to those perforations (7) of the other layer (2), and comprising longitudinally extending pocketlike limited sections (4) in which the layers (1, 2) are not glued together, **characterized** in that the unlaminated sections (4) describe a straight row in the entire length (3) of the foil and consist of separate pockets (5) between the layers (1, 2), and where the perforations (6, 7) extend into the pockets (5).

2. Method of producing a foil according to claim 1, where the two layers (1, 2) are each perforated (6, 7) with at least one row of holes, the holes of the one layer (1) being staggered relative to the holes of the other layer (2), **characterized** in that the one layer (1) is coated with glue (8) everywhere on the inside with the exception of a row of sections (4) positioned opposite a row of perforations (6), after which the layers (1, 2) are put together for the formation of the finished laminate (3), where the holes (6, 7) extend through the layers (1, 2) into the pockets (5) in the section (4).

3. Method according to claim 2, **characterized** in that the application of glue takes place by means of a roller (12) which on its surface is provided with recesses (14) which do not carry glue (16), and which form the unlaminated sections (4) when the layers (1, 2) are put together between two rollers (18) for the lamination.

4. Application of the foil according to claim 1, **characterized** in that the foil (3) is folded and sealed (21, 20) along the side (22) and bottom (19) for the formation of a bag which is then filled, particularly with freshly ground coffee, after which the bag is closed by sealing along the top (23) of the bag.

## Patentansprüche

1. Folie zum Aufbau einer Verpackung mit Ventil, vorzugsweise für eine Verpackung von Gase emittitierenden Produkten, die aus einer inneren und äußeren Schicht besteht, wobei in den Schichten (1, 2) Perforationen (6, 7) ausgebildet sind und die Perforationen (6) einer Schicht (1) in bezug auf die Perforationen (7) der anderen Schicht (2) versetzt sind, und die längs ausgerichtete, taschenähnliche, begrenzte Abschnitte (4) aufweist, in denen die Schichten (1, 2) nicht zusammengeklebt sind, dadurch **gekennzeichnet**, daß die nichtlaminierten Abschnitte (4) eine gerade Reihe über die gesamte Länge (3) der Folie darstellen und aus getrennten Taschen (5) zwischen den Schichten (1, 2) bestehen, wobei die Perforationen (6, 7) sich in die Taschen (5) erstrecken.

2. Verfahren zum Herstellen einer Folie gemäß Anspruch 1, bei der die beiden Schichten (1, 2) jeweils mit wenigstens einer Reihe von Löchern perforiert (6, 7) sind, wobei die Löcher einer Schicht (1) in bezug auf die Löcher der anderen Schicht (2) versetzt sind, dadurch **gekennzeichnet**, daß die eine Schicht (1) mit Klebstoff (8) überall auf der Innenseite mit Ausnahme einer Reihe von Abschnitten (4), die einer Reihe von Perforationen (6) gegenüber angeordnet sind, bedeckt ist, woraufhin die Schichten (1, 2) zum Bilden des fertigen Laminats (3) zusammengesetzt werden, bei dem die Löcher (6, 7) sich durch die Schichten (1, 2) in die Taschen (5) des Abschnitts (4) erstrecken.

3. Verfahren gemäß Anspruch 2, dadurch **gekennzeichnet**, daß der Klebstoffeinsatz mittels einer Rolle (12) stattfindet, die auf ihrer Oberfläche (4) mit Aussparungen (14) versehen ist, die keinen Klebstoff (16) tragen, und die nicht-laminierte Abschnitte (4) bilden, wenn die Schichten (1, 2) zwischen zwei Rollen (18) zum Laminieren zusammengesetzt werden.

4. Anwendung der Folie gemäß Anspruch 1, dadurch **gekennzeichnet**, daß die Folie (3) längs der Seite (22) und dem Boden (19) zum Bilden einer Tasche gefaltet und abgedichtet (21, 20) ist, wobei die Tasche dann insbesondere mit frisch gemahlenem Kaffee gefüllt und anschließend durch Abdichten längs der Oberfläche (23) der Tasche geschlossen wird.

## Revendications

1. Feuille destinée à la fabrication d'un emballage avec clapet, essentiellement pour emballer des produits émettant des gaz, laquelle feuille consiste en une couche interne et en une couche externe, des perforations (6, 7) étant pratiquées dans ces couches (1, 2), les perforations (6) d'une couche (1) étant décalées par rapport aux perforations (7) de l'autre couche (2), et comprenant des parties limitées en forme de poche et s'étendant longitudinalement (4), dans lesquelles les couches (1, 2) ne sont pas collées l'une sur l'autre, caractérisée en ce que les parties non stratifiées (4) forment une rangée droite sur toute la longueur (3) de la feuille et en ce qu'elles consistent en des poches séparées (5) entre les couches (1, 2), les perforations (6, 7) arrivant jusqu'aux poches (5).

2. Procédé de fabrication d'une feuille selon la revendication 1, dans lequel les deux couches (1, 2) sont chacune perforées (6, 7) pour présenter au moins une rangée de trous, les trous d'une couche (1) étant décalés par rapport aux trous de l'autre couche (2), caractérisé en ce qu'une couche (1) est enduite de colle (8) partout sur sa face interne, à l'exception d'une rangée de parties (4) situées en face d'une rangée de perforations (6), après quoi les couches (1, 2) sont assemblées pour former le stratifié fini (3), dans lequel les trous (6, 7) traversent les couches (1, 2) pour arriver dans les poches (5) dans la partie (4).

3. Procédé selon la revendication 2, caractérisé en ce que l'application de colle est effectuée au moyen d'un rouleau (12) qui comporte, sur sa surface, des cavités (14) qui ne portent pas de colle (16) et qui forment les parties non stratifiées (4) lorsque les couches (1, 2) sont assemblées entre deux rouleaux (18) pour la lamification.

4. Utilisation de la feuille selon la revendication 1, caractérisée en ce que la feuille (3) est pliée et scellée (21, 20) le long du côté (22) et du bas (19) pour former un sachet, qui est ensuite rempli, notamment de café fraîchement moulu, après quoi le sachet est fermé par scellage du haut (23) du sachet.
